# EUROPEAN PATENT SPECIFICATION

(11) **EP 3 841 475 B1**
(45) Date of publication and mention of the grant of the patent: **21.02.2024**
(21) Application number: 18827112.6
(22) Date of filing: 21.12.2018
(51) Int. Cl.: G06F 11/36

(54) **METHOD AND APARATUS FOR VERIFYING A SOFTWARE SYSTEM**
VERFAHREN UND VORRICHTUNG ZUR VERIFIZIERUNG EINES SOFTWARE-SYSTEMS
PROCÉDÉ ET APPAREIL DE VÉRIFICATION D'UN SYSTÈME LOGICIEL

(30) Priority: 28.09.2018 IN 201831036644
(43) Date of publication of application: 30.06.2021
(73) Proprietor: Siemens Industry Software Inc., Plano, TX 75024 (US)
(72) Inventor: RATIU, Daniel, 80997 München (DE); SORAKAYALPET ARUMUGAM, Sundaresan, Chennai, Tamil Nadu 600100 (IN)
(74) Representative: Isarpatent
(86) International application number: PCT/EP2018/086646
(87) International publication number: WO 2020/064139

(56) References cited:
- EP-A1- 2 447 848
- US-A1- 2011 184 705
- Daniel Ratiu,Vincent Nimal: "Verification-Cases: Characterizing the CompletenessDegree of Incomplete Verification for C Programs", , 2015, pages 1-7, XP002791917, Retrieved from the Internet: URL:http://fm.csl.sri.com/VeriSure2015/tal ks/VerificationCase.pdf [retrieved on 2019-06-07]
- IVANCIC F ET AL: "Efficient SAT-based bounded model checking for software verification", THEORETICAL COMPUTER SCIENCE, AMSTERDAM, NL, vol. 404, no. 3, 28 September 2008 (2008-09-28), pages 256-274, XP024341034, ISSN: 0304-3975, DOI: 10.1016/J.TCS.2008.03.013 [retrieved on 2008-03-23]
- LIEBELT C ED - KNAFL G J: "DESIGNING CONSISTENCY - PRESERVING DATABASE TRANSACTIONS", PROCEEDINGS OF THE ANNUAL INTERNATIONAL COMPUTER SOFTWARE AND APPLICATIONS CONFERENCE. (COMPSAC). ORLANDO, SEPT. 20 - 22, 1989; [PROCEEDINGS OF THE ANNUAL INTERNATIONAL COMPUTER SOFTWARE AND APPLICATIONS CONFERENCE. (COMPSAC)], WASHINGTON, IEEE COMP., vol. CONF. 13, 20 September 1989 (1989-09-20), pages 300-307, XP000091520,

## Description

The present disclosure relates generally to a field of design and development of software systems, and more particularly relates to a method and apparatus for verifying a software system.

Software systems such as reactive systems which process input data at each step using a software logic and produce an output command. An example of the reactive system is adaptive cruise controller for a vehicle. The adaptive cruise controller takes input data such as distance to a next vehicle, current speed of vehicle, desired speed, and produces output command to a throttle.

After development of a software system, the software system is required to be verified to confirm compliance to a specification and expected behavior of the software system in real time. However, it is unpracticable to exhaustively test behavior of the software system as this would require a huge number of long traces of input data and enormous amount of time. Currently, verification is software system is performed using closed loop simulations. In this technique, a number of simulations are performed on the software system which cover typical scenarios which the software system is likely to encounter in real time. However, verification of the software system using closed loop simulations would have very limited coverage due to limited number of scenarios used, leading to significant number of false negatives.

EP2447848 discloses a technique for bringing a software system to a desired starting state among several options and executing therefrom a software verification by symbolic execution.

Therefore, a method and apparatus for verifying a software system is disclosed. The invention is defined by the set of appended claims. The dependent claims define particular embodiments.

In one aspect, a data processing apparatus for verifying a software system includes a processing unit, and a memory unit communicatively coupled to the processing unit. The memory unit includes a simulation module configured to perform simulation of a software system (e.g., a reactive system) for a first set of steps based on a first set of input values. For example, the simulation of the software system is performed using a closed loop simulation technique. The memory unit includes a verification module configured to determine a state of the software system in which verification of the software system is to be initiated, and initiate verification of the software system in the determined state. The verification module is configured to perform verification of the software system for a second set of steps based on a second set of input values, and a certain internal state of the software system, and output results of the verification of the software system on a display unit. For example, the verification of the software system is performed using a bounded-model checking technique. Moreover, the verification module is configured to generate a plurality of test vectors for testing the software system. It can be noted that, the first set of steps are greater than the second set of steps whereas the first set of input values are less than the second set of input values.

Additionally, the simulation module may be configured to determine a set of states associated with the software system during the first set of steps performed by the software system, and store values of state variables associated with each state of the software system in a verification database.

Furthermore, the verification module is configured to instantaneously determine a state of the set of states in which the software system starts operating in an operation mode. Additionally, the verification module is configured to initialize the software system in the determined state using values of the state variables associated with the determined state, and initiate verification of the initialized software system in the determined state.

Moreover, the verification module may be configured to parse programming language statements associated with the software system, generate a control flow graph based on the parsed programming language statements, and determine whether any of the second set of input values are violated.

In another aspect, a method of verifying a software system includes performing simulation of a software system for a first set of steps based on a first set of input values, and determining a state of the software system in which verification of the software system is to be initiated. For example, the simulation of the software system may be performed using a closed loop simulation technique. The method may include initiating verification of the software system at the determined state, and performing verification of the software system for a second set of steps based on a second set of input values. For example, the verification of the software system may be performed using a bounded-model checking technique. Moreover, the method includes outputting results of the verification of the software system on a display unit. Also, the method may include generating a plurality of test vectors capable of testing the software system.

Furthermore, the method may include determining a set of states associated with the software system during the first set of steps performed by the software system, and storing values of state variables associated with each state of the software system in a verification database.

Additionally, the method may include instantaneously determining a state from the set of states in which the software system starts operating in an operation mode. The method may include initializing the software system in the determined state using values of the state variables associated with the determined state, and initiating verification of the initialized software system in the determined state.

Also, the method may include parsing programming language statements associated with the software system, generating a control flow graph based on the parsed programming language statements, and determining whether any of the second set of input values are violated.

In yet another aspect, a non-transitory computer-readable storage medium, having machine-readable instructions stored therein, that when executed by a processing unit, cause the processing unit to perform a method described above.

A more complete appreciation of the present disclosure and many of the attendant aspects thereof will be readily obtained as the same becomes better understood by reference to the following description when considered in connection with the accompanying drawings:
- FIG 1: illustrates a block diagram of a data processing apparatus capable of performing verification of the software system, according to one embodiment;
- FIG 2: is a process flowchart illustrating an exemplary method of verifying the software system, according to one embodiment;
- FIG 3: is a process flowchart illustrating a detailed method of verifying the software system, according to one embodiment; and
- FIG 4: is a graphical representation depicting approach applied in verification of the software system.

Various embodiments are described with reference to the drawings, wherein like reference numerals are used to refer to like elements throughout. In the following description, numerous specific details are set forth in order to provide thorough understanding of embodiments of the present disclosure. It will be apparent to one skilled in the art, that these specific details need not be employed to practice embodiments of the present disclosure. In other instances, well known materials or methods have not been described in detail to avoid unnecessarily obscuring embodiments of the present disclosure. While the disclosure is susceptible to various modifications and alternative forms, specific embodiments thereof are shown by way of example in the drawings and will herein be described in detail.

In one embodiment, a method and apparatus are provided to verify a software system in an appropriate state based on a plurality of input values. Typically, the software system includes software components which are responsible for performing one or more functions associated with hardware system. The hardware system may be a vehicle with an adaptive cruise controller. The software system takes inputs from various components of the vehicle such as speed, distance to vehicle in front, etc. and produces a command by processing the inputs. The command is processed by another component of the vehicle such as throttle to accelerate or decelerate the vehicle. Before the software system is deployed in an embedded system such as integrated circuit, it is important to verify behavior of the software system. Malfunctioning of the software system may lead to unexpected behavior of the adaptive cruise controller and sometimes may lead to vehicle crash. The following description describes a data processing system and a method performed by the data processing system to perform verification of the software system during design and development of the software system.

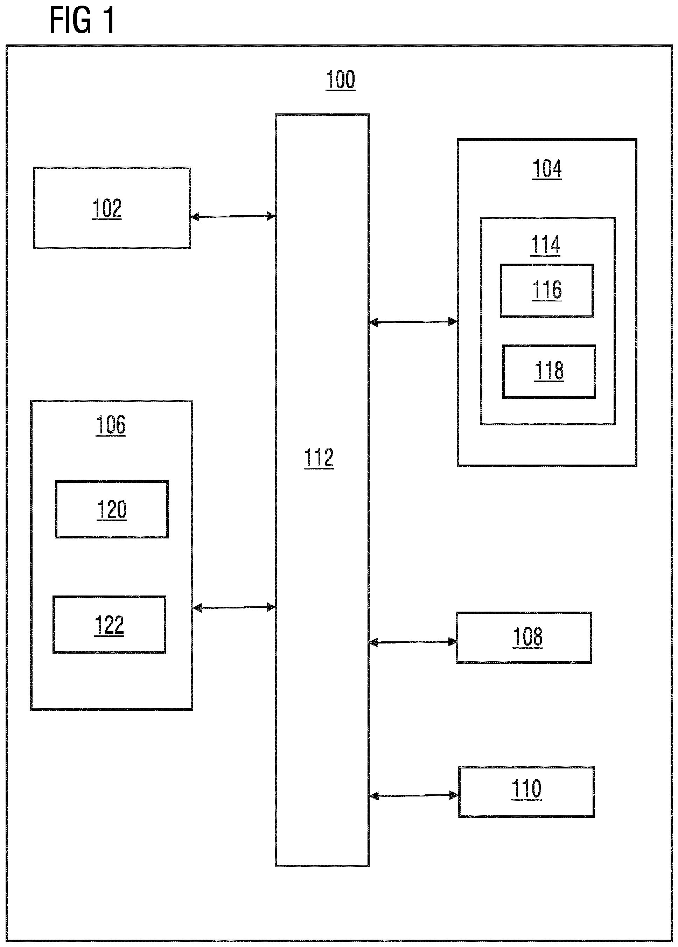

FIG 1 illustrates a block diagram of a data processing apparatus 100 in which an embodiment can be implemented, for example, as a data processing apparatus particularly configured by software or otherwise to perform the processes as described herein. The data processing apparatus 100 may be a personal computer, a laptop computer, a tablet, smart phone, and the like. In FIG 1, the data processing apparatus 100 includes a processing unit 102, an accessible memory 104, a storage unit 106, an input unit 108, a display unit 110, and a bus 112.

The processing unit 102, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 102 may also include embedded controllers, such as generic or programmable logic devices or arrays, application specific integrated circuits, single-chip computers, and the like.

The memory 104 may be volatile memory and non-volatile memory. The memory 104 may be coupled for communication with the processing unit 102. The processing unit 102 may execute instructions and/or code stored in the memory 104. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 104 includes software design and development (SDD) module 114.

The SDD module 114 includes a simulation module 116 and a verification module 118 stored in the form of machine-readable instructions on any of the above-mentioned storage media and may be in communication to and executed by processing unit 102. When executed by the processing unit 102, the SDD module 114 causes the processing unit 102 to perform verification of a software system developed by the SDD module 114 and generate test vectors capable of testing the software system. The simulation module 116 causes the processing unit 102 to perform simulation of the software system for a first set of steps based on a first set of input values. The simulation of the software system enables determining a set of states associated with the software system when the first set of steps are performed by the software system using the first set of input values. The simulation of the software system is performed using a plant model from the plant model database 122. The plant model represents an environment associated with the software system.

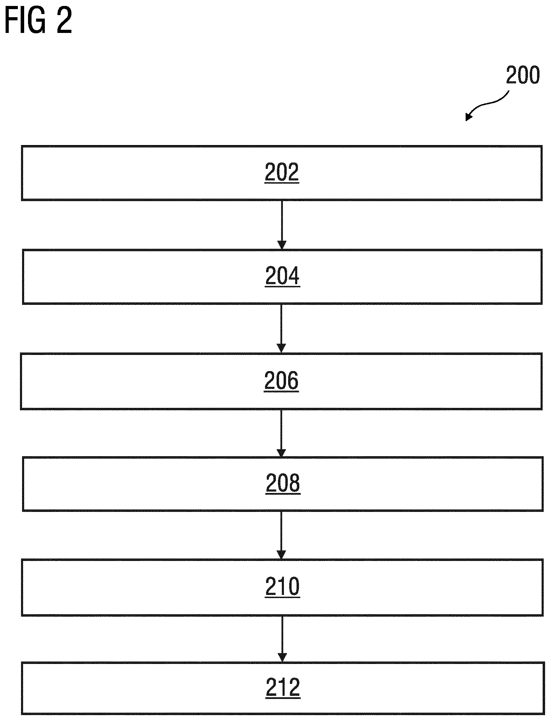

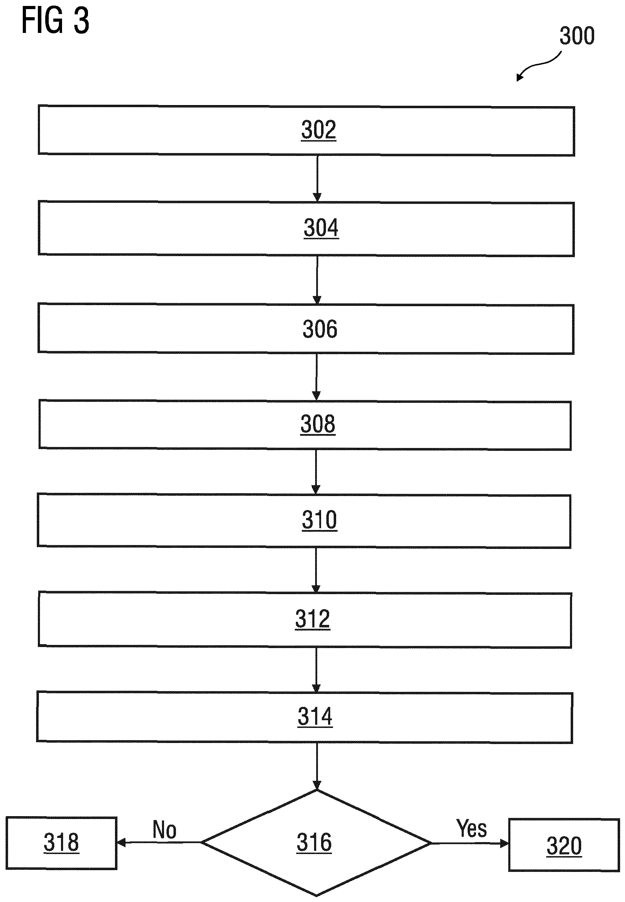

The verification module 118 causes the processing unit 102 to determine a state of the software system in which verification of the software system is to be initiated. The verification module 118 causes the processing unit 102 to initiate verification of the software system in the determined state and perform verification of the software system for second set of steps based on a second set of input values. The verification module 118 causes the processing unit 102 to output results of the verification of the software system on the display unit 110. Additionally, the verification module 118 causes the processing unit 102 to generate test vectors for testing the software system. It can be noted that, method steps performed by the processing unit 102 to achieve the above functionality are described in greater detail in FIG 2 and FIG 3.

The storage unit 106 may be a non-transitory storage medium which stores a verification database 120 and a plant model database 122. The verification database 120 stores values of state variables associated with the set of states determined during simulation of the software system. In an adaptive cruise control (ACC) software system of a car, state variables may include mode of ACC (e.g. sport/economic, keep speed, keep distance, low speeds in traffic jams, etc.). In the "keep distance" mode, the ACC must maintain a minimal distance from a vehicle in front. Additional state variables in this mode are "minimum distance to keep" (can have different values depending on road conditions, current vehicle speed, driving mode, inertia of the vehicle caused by vehicle and passengers weight, etc.), "health status of ACC" (can have values set by the self-diagnosis system which cross-checks the correct functioning of the ACC), "history of distance to the next vehicle" (values are originating from the sensor after a braking was initiated and are used to adapt the breaking force to the current breaking conditions - e.g. road, variation of the speed of the vehicle in front - such that the breaking "feels smooth" to the driver but ensures the required safety requirements).

The input unit 108 may include input means such as keypad, touch-sensitive display, camera (such as a camera receiving gesture-based inputs), etc. capable of receiving input signal such as user commands to design, develop, verify, test a software system. The display unit 110 may be configured to display a graphical user interface which visualizes the software system along with results of the verification of the software system. The bus 112 acts as interconnect between the processing unit 102, the memory 104, the storage unit 106, the input unit 108, and the display unit 110.

Those of ordinary skilled in the art will appreciate that the hardware depicted in FIG 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A data processing apparatus in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. The operating system is modified or created in accordance with the present disclosure as described.

Disclosed embodiments provide systems and methods that verify software system in an integrated-development environment. In particular, disclosed techniques perform simulation of a software system, determine a state associated with software system in which verification is initiated, initiate the verification of the software system in the determined state, perform verification of the software system, and output results of the verification of the software system on a display unit.

Those skilled in the art will recognize that, for simplicity and clarity, the full structure and operation of all data processing apparatus suitable for use with the present disclosure is not being depicted or described herein. Instead, only so much of a data processing apparatus as is unique to the present disclosure or necessary for an understanding of the present disclosure is depicted and described. The remainder of the construction and operation of the data processing apparatus 100 may conform to any of the various current implementation and practices known in the art.

FIG 2 is a process flowchart 200 illustrating an exemplary method of verifying a software system, according to one embodiment. In act 202, simulation of a software system is performed for a first set of steps based on a first set of input values. For example, the simulation of the software system is performed using closed-loop simulation technique. In the closed-loop simulation technique, the software system is simulated using a plant model which represent environment of the software system. The simulation of the software system is performed for the first set of steps during initialization mode of the software system. The simulation of the software system helps to bring the software system into a desired state which enables to perform verification of the software system. For example, the simulation of the software system is performed until a pre-defined condition is met. The condition can be (i) an adaptive cruise control (ACC) system of a car is started and initialized or (ii) the ACC system is in "keep distance mode" and has been running on icy roads for 10 minutes and another car in front started breaking violently. When the pre-defined condition is true, the inputs, generated by the plant model, which lead to a desired state of the software system is determined.

In act 204, a state of the software system in which verification of the software system is to be initiated is determined instantaneously. For example, the software system may operate in the initialization mode for some time and later switch to an operation mode (i.e., desired state). In some embodiments, a state in which the software system starts operating in the operation mode is determined. It is desired that the software system is verified in the desired state. Alternatively, it is desired that behavior of the software system is verified after the software system has reached the desired state. For example, correct behavior of adaptive cruise control of a car is to be verified upon detecting icy road conditions, high speed of the car and the distance to the vehicle ahead of the car is decreasing rapidly (e.g., presumably due to a full-stop of the front car due to a collision with the vehicle in front of it).

In act 206, verification of the software system is initiated at the determined state of the software system. Also, simulation of the software system using a closed-technique is stopped at the determined state. During initiation of the verification, the software system is initialized in the determined state using values of state variables obtained during the simulation of the software system. At act 208, verification of the software system is performed for a second set of steps based on second set of input values. For example, the verification of the software system is performed using a bounded-model checking technique. The verification of the software system includes confirming whether the software system complies with a specification, confirming whether behavior of the software system during the operation mode meets expected behavior and so on. This is achieved by determining whether the second set of input values are violated. That is, output values corresponding to the second set of input values match expected output values. At act 210, results of verification of the software system are outputted on a display unit. For example, the results of verification may include one or more input values which are violated. At act 212, a plurality of test vectors capable of testing the software system in a desired operation mode is generated.

FIG 3 is a process flowchart 300 illustrating a detailed method of verifying a software system, according to one embodiment. At act 302, a set of states associated with the software system are determined when the first set of steps performed on the software system. At act 304, values of state variables associated with each state of the software system are stored in a verification database. At act 306, a state of the software system during which verification of the software system is to be initiated is determined. In some embodiments, a state of the set of states in which the software system starts operating in an operation mode is determined. It can be noted that, the values of program variables are initialized symbolically to reflect desired starting point of the verification.

At act 308, the software system is initialized in the determined state using the stored values of the state variables associated with the determined state. At act 310, verification of the initialized software system is initiated in the determined state.

At act 312, programming language statements associated with the software system are parsed. At act 314, a control flow graph is generated based on the parsed programming language statements. At act 316, it is determined whether any of the second set of input values lead to the violation of the specification. If it is determined that the second set of input values lead to the violation of the specification, then at act 318, a notification indicating the verification of the software system failed along with input values which led to the violation of the specification are displayed on a display unit. If it is determined that the second set of input values do not lead to violation of the specification, then at act 320, a notification indicating the verification of the software system is successful is displayed on the display unit.

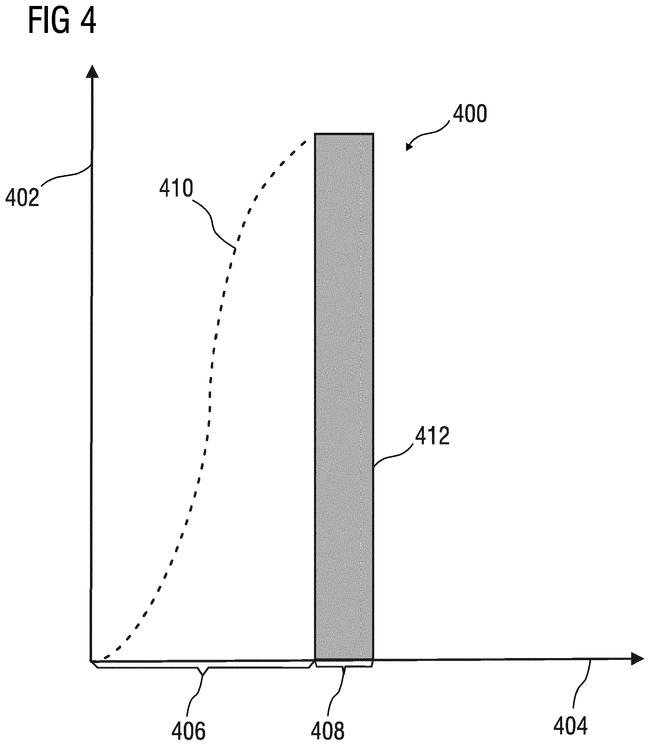

FIG 4 is a graphical representation 400 depicting approach applied in verification of a software system, according to one embodiment. As explained above, the verification of a software system with one input port is carried out using two approaches namely: closed-loop simulation technique followed by a bounded-model checking technique. At first, simulation of the software system composed with a plant model is performed for N number of steps 406 based on an input value provided via the input port using a closed-loop simulation technique. The simulation of the software system enables to reach a certain state in which verification of the software system can be initiated. During simulation of the software system, a set of states associated with the software system are determined and values of state variables associated with the set of states are stored. Thereafter, a desired state for verifying the software system is determined. Accordingly, the software system is initialized using the values of state variables associated with the determined state. For example, a controller of a motor may need thousands of cycles to warm up the engine and reach an operation mode (i.e., desired state). However, verification of certain properties of the engine may need to be performed during the operation mode. The simulation of the software system helps to start verification in the desired state (i.e., the operation mode of the engine). In another example, after an adaptive cruise control (ACC) system is activated by a car driver, the ACC system needs hundreds of cycles to initialize car monitoring state from which the ACC system can take control of a braking system of the car.

Then, verification of the software system is performed for M number of steps 408 based on a plurality of input values using a bounded-model checking technique. The bounded-model checking technique enables to exhaustively explore behavior of the software system for M number of steps 408. In one exemplary implementation, a C-level model checker processes programming language statements (e.g., C language statements), and transforms the programming language statements in a symbolic representation (e.g., a control flow graph). The C-level model checker determine one or more input values that lead to the violation (abnormal behavior of the software system). This is achieved by traversing through the control flow graph and identify paths in the control flow graph which lead to violations. For example, the C-model checker uses a decision procedure to traverse through the control flow graph and identify paths that lead to violations. The decision procedure may employ a bit-vector logic including non-linear arithmetic and arrays to solve reachability of paths represented as a Boolean satisfiability problem.

The graphical representation 400 depicts the approach used in verification of the software system. The graphical representation 400 includes an X-axis 404 representing steps performed on the software system during verification of the software system and Y-axis 402 representing a number of inputs used for simulation and verification of the software system. As shown in the graphical representation 400, the simulation of the software system is performed for N number of steps 406 based on a single input value received at each of the N number of steps 406. Hence, the graphical representation 400 depicts shape of input space covered by the simulation as a curved line 410. Following the simulation of the software system, the verification of the software system is performed for the M number of steps 408 in a desired state based on a plurality of input values received at each of the N number of steps 406. Hence, shape of input space 412 covered by the bounded-model checking technique is a region.

The various embodiments, the methods and apparatuses described in FIG 1 to FIG 4 verifies a software system using combination of closed-loop simulation and a bounded-model checking. This is because, during initialization of the software system, simulation of the software system is performed over many steps but cover small part of possible input space. Advantageously, simulation of the software system quickly brings the software system to a desired state for verification of the software system. Also, increased coverage in terms of number of steps is achieved. At the desired state (mode of operation) of the software system, bounded-model checking is performed for small number of steps but over a large input space. Thus, possibility of detecting higher number of faulty input values over large input spaces is higher. Also, increased depth of verification is obtained.

It is to be understood that the system and methods described herein may be implemented in various forms of hardware, software, firmware, special purpose processors, or a combination thereof. One or more of the present embodiments may take a form of a computer program product including program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology can be centralized or distributed (or a combination thereof) as known to those skilled in the art.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description.

## Claims

1. A data processing apparatus (100) for verifying a software system including software components for performing one or more functions associated with a hardware system which can be operated in different operation modes, each mode comprising a plurality of state variables, comprising:
at least one processing unit (102); and
at least one memory unit (104) communicatively coupled to the processing unit (102), wherein the memory unit (104) comprises:
a simulation module (116) configured to:
perform simulation of the software system for a first set of steps based on a first set of input values;
determine a set of states associated with the software system during the first set of steps performed by the software system;
store values of state variables associated with each state of the software system in a verification database; and
a verification module (118) configured to:
determine a state of the software system in which verification of the software system is to be initiated, wherein the determination of the state of the software system in which verification of the software system is to be initiated comprises instantaneously determining a desired state from the set of states in which the software system starts operating in an operation mode corresponding to the desired state;
initialize the software system in the determined state using values of the state variables associated with the determined state stored in the verification database;
initiate verification of the initialized software system in the determined state;
perform verification of the software system for a second set of steps based on a second set of input values; and
output results of the verification of the software system on a display unit (110),
wherein the verification module (118) is further configured to:
parse programming language statements associated with the software system;
generate a control flow graph based on the parsed programming language statements; and
determine whether any of the second set of input values that lead to violation of a specification of the software system.

2. The data processing apparatus (100) according to claim 1, wherein the verification module (118) is configured to generate a plurality of test vectors for testing the software system.

3. The data processing apparatus (100) according to claim 1 or 2, wherein the simulation module (116) is configured to perform the simulation of the software system using a closed-loop simulation technique.

4. The data processing apparatus (100) according to claim 1 or 2, wherein the verification module (118) is configured to perform the verification of the software system using a bounded-model checking technique.

5. A method of verifying a software system including software components for performing one or more functions associated with a hardware system which can be operated in different operation modes, each mode comprising a plurality of state variables, comprising:
performing, by a data processing apparatus (100), simulation of a software system for a first set of steps based on a first set of input values;
determining, by the data processing apparatus (100), a state of the software system in which verification of the software system is to be initiated;
determining, by the data processing apparatus (100), a set of states associated with the software system during the first set of steps performed by the software system;
storing, by the data processing apparatus (100), values of state variables associated with each state of the software system in a verification database;
determining a state of the software system in which the verification of the software system is to be initiated, comprising instantaneously determining a desired state from the set of states in which the software system starts operating in an operation mode corresponding to the desired state; initializing, by the data processing apparatus (100), the software system in the determined state using values of the state variables associated with the determined state stored in the verification database;
initiate verification of the initialized software system in the determined state;
performing, by the data processing apparatus (100), verification of the software system for a second set of steps based on a second set of input values,
outputting, by the data processing apparatus (100), results of the verification of the software system on a display unit (110),
wherein performing the verification of the software system comprises:
parsing programming language statements associated with the software system;
generating a control flow graph based on the parsed programming language statements; and
determining whether any of the second set of input values lead to violation of a specification of the software system.

6. The method according to claim 5, further comprising:
generating, by the data processing apparatus (100), a plurality of test vectors capable of testing the software system.

7. The method according to claim 5 or 6, wherein the simulation of the software system is performed using a closed-loop simulation technique.

8. The method according claim 5 or 6, wherein the verification of the software system is performed using a bounded-model checking technique.

9. A non-transitory computer-readable storage medium, having machine-readable instructions stored therein, that when executed by a processing unit (102), cause the processing unit (102) to perform a method for verifying a software system including software components for performing one or more functions associated with a hardware system which can be operated in different operation modes, each mode comprising a plurality of state variables, the method comprising:
performing simulation of a software system for a first set of steps based on a first set of input values;
determining a state of the software system in which verification of the software system is to be initiated;
determining a set of states associated with the software system during the first set of steps performed by the software system;
storing values of state variables associated with each state of the software system in a verification database;
determining a state of the software system in which the verification of the software system is to be initiated, comprising instantaneously determining a desired state from the set of states in which the software system starts operating in an operation mode corresponding to the desired state;
initializing the software system in the determined state using values of the state variables associated with the determined state stored in the verification database;
initiating verification of the initialized software system in the determined state;
performing verification of the software system for a second set of steps based on a second set of input values; and
outputting results of the verification of the software system on a display unit,
wherein performing the verification of the software system comprises:
parsing programming language statements associated with the software system;
generating a control flow graph based on the parsed programming language statements; and
determining whether any of the second set of input values lead to violation of a specification of the software system, wherein the machine-readable instructions cause the processing unit (102) to perform method steps comprising:
parsing programming language statements associated with the software system;
generating a control flow graph based on the parsed programming language statements; and
determining whether any of the second set of input values lead to violation of a specification of the software system.

10. The storage medium of claim 9, wherein the machine-readable instructions cause the processing unit (102) to perform a method step comprising:
generating a plurality of test vectors capable of testing the software system.

11. The storage medium of any of the claims 9 or 11, wherein the simulation of the software system is performed using a closed-loop simulation technique, and wherein the verification of the software system is performed using a bounded-model checking technique.

## Patentansprüche

1. Datenverarbeitungsvorrichtung (100) zum Verifizieren eines Softwaresystems mit Softwarekomponenten zum Durchführen einer oder mehrerer Funktionen, die einem Hardwaresystem zugeordnet sind, das in verschiedenen Betriebsmodi betrieben werden kann, wobei jeder Modus eine Mehrzahl von Zustandsvariablen umfasst, umfassend:
zumindest eine Verarbeitungseinheit (102); und
zumindest eine Speichereinheit (104), die kommunikativ mit der Verarbeitungseinheit (102) gekoppelt ist, wobei die Speichereinheit (104) umfasst:
ein Simulationsmodul (116), das dazu ausgelegt ist:
eine Simulation des Softwaresystems für einen ersten Satz von Schritten basierend auf einem ersten Satz von Eingabewerten durchzuführen;
einen Satz von Zuständen zu bestimmen, die dem Softwaresystem während des ersten Satzes von Schritten zugeordnet sind, die durch das Softwaresystem durchgeführt werden;
Werten von Zustandsvariablen, die jedem Zustand des Softwaresystems zugeordnet sind, in einer Verifizierungsdatenbank zu speichern; und
ein Verifizierungsmodul (118), das dazu ausgelegt ist:
einen Zustand des Softwaresystems zu bestimmen, in dem eine Verifizierung des Softwaresystems initiiert werden soll, wobei die Bestimmung des Zustands des Softwaresystems, in dem die Verifizierung des Softwaresystems zu initiieren ist, das sofortige Bestimmen eines gewünschten Zustands aus dem Satz von Zuständen umfasst, in denen das Softwaresystem in einem Betriebsmodus entsprechend dem gewünschten Zustand zu arbeiten beginnt;
das Softwaresystems in dem bestimmten Zustand unter Verwendung von Werten der Zustandsvariablen, die dem in der Verifizierungsdatenbank gespeicherten bestimmten Zustand zugeordnet sind, zu initiieren;
die Verifizierung des initialisierten Softwaresystems in dem bestimmten Zustand zu initiieren;
eine Verifizierung des Softwaresystems für einen zweiten Satz von Schritten basierend auf einem zweiten Satz von Eingabewerten durchzuführen; und
Ergebnisse der Verifizierung des Softwaresystems auf einer Anzeigeeinheit (110) auszugeben,
wobei das Verifizierungsmodul (118) ferner dazu ausgelegt ist:
die dem Softwaresystem zugeordneten Aussagen der Programmiersprache zu parsen;
einen Steuerflussgraphen basierend auf den geparsten Aussagen der Programmiersprache zu erzeugen; und
zu bestimmen, ob einer der Eingabewerte aus dem zweiten Satz zu einer Verletzung einer Vorgabe des Softwaresystems führt.

2. Datenverarbeitungsvorrichtung (100) nach Anspruch 1, wobei das Verifizierungsmodul (118) dazu ausgelegt ist, eine Mehrzahl von Testvektoren zum Testen des Softwaresystems zu erzeugen.

3. Datenverarbeitungsvorrichtung (100) nach Anspruch 1 oder 2, wobei das Simulationsmodul (116) dazu ausgelegt ist, die Simulation des Softwaresystems unter Verwendung einer Closed-Loop-Simulationstechnik durchzuführen.

4. Datenverarbeitungsvorrichtung (100) nach Anspruch 1 oder 2, wobei das Verifizierungsmodul (118) dazu ausgelegt ist, die Verifizierung des Softwaresystems unter Verwendung einer beschränkten Modell-Prüftechnik durchzuführen.

5. Verfahren zum Verifizieren eines Softwaresystems mit Softwarekomponenten zum Durchführen einer oder mehrerer Funktionen, die einem Hardwaresystem zugeordnet sind, das in verschiedenen Betriebsmodi betrieben werden kann, wobei jeder Modus eine Mehrzahl von Zustandsvariablen umfasst, umfassend:
Durchführen, durch eine Datenverarbeitungsvorrichtung (100), einer Simulation eines Softwaresystems für einen ersten Satz von Schritten basierend auf einem ersten Satz von Eingabewerten;
Bestimmen, durch die Datenverarbeitungsvorrichtung (100), eines Zustands des Softwaresystems, in dem eine Verifizierung des Softwaresystems zu initiieren ist;
Bestimmen, durch die Datenverarbeitungsvorrichtung (100), eines Satzes von Zuständen, die dem Softwaresystem während des ersten Satzes von Schritten zugeordnet sind, die durch das Softwaresystem durchgeführt werden;
Speichern, durch die Datenverarbeitungsvorrichtung (100), von Werten von Zustandsvariablen, die jedem Zustand des Softwaresystems zugeordnet sind, in einer Verifizierungsdatenbank;
Bestimmen eines Zustands des Softwaresystems, in dem die Verifizierung des Softwaresystems zu initiieren ist, umfassend das sofortige Bestimmen eines gewünschten Zustands aus dem Satz von Zuständen, in dem das Softwaresystem in einem Betriebsmodus entsprechend dem gewünschten Zustand zu arbeiten beginnt;
Initialisieren des Softwaresystems in dem bestimmten Zustand durch die Datenverarbeitungsvorrichtung (100) unter Verwendung von Werten der Zustandsvariablen, die dem in der Verifizierungsdatenbank gespeicherten bestimmten Zustand zugeordnet sind;
die Verifizierung des initialisierten Softwaresystems in dem bestimmten Zustand zu initiieren;
Durchführen, durch die Datenverarbeitungsvorrichtung (100), einer Verifizierung des Softwaresystems für einen zweiten Satz von Schritten basierend auf einem zweiten Satz von Eingabewerten,
Ausgeben, durch die Datenverarbeitungsvorrichtung (100), von Ergebnisse der Verifizierung des Softwaresystems auf einer Anzeigeeinheit (110),
wobei das Durchführen der Verifizierung des Softwaresystems umfasst:
Parsen der dem Softwaresystem zugeordneten Aussagen der Programmiersprache;
Erzeugen eines Steuerflussgraphen basierend auf den geparsten Programmiersprachenanweisungen; und
Bestimmen, ob einer der Eingabewerte aus dem zweiten Satz zu einer Verletzung einer Vorgabe des Softwaresystems führt.

6. Verfahren nach Anspruch 5, ferner umfassend:
Erzeugen, durch die Datenverarbeitungsvorrichtung (100), einer Mehrzahl von Testvektoren, die in der Lage sind, das Softwaresystem zu testen.

7. Verfahren nach Anspruch 5 oder 6, wobei die Simulation des Softwaresystems unter Verwendung einer Closed-Loop-Simulationstechnik durchgeführt wird.

8. Verfahren nach Anspruch 5 oder 6, wobei die Verifizierung des Softwaresystems unter Verwendung einer beschränkten Modell-Prüftechnik durchgeführt wird.

9. Nichtflüchtiges computerlesbares Speichermedium mit darin gespeicherten maschinenlesbaren Anweisungen, die, wenn sie durch eine Verarbeitungseinheit (102) ausgeführt werden, die Verarbeitungseinheit (102) veranlassen, ein Verfahren zum Verifizieren eines Softwaresystems durchzuführen, das Softwarekomponenten zum Durchführen einer oder mehrerer Funktionen beinhaltet, die einem Hardwaresystem zugeordnet sind, das in verschiedenen Betriebsmodi betrieben werden kann, wobei jeder Modus eine Mehrzahl von Zustandsvariablen umfasst, wobei das Verfahren umfasst:
Durchführen einer Simulation eines Softwaresystems für einen ersten Satz von Schritten basierend auf einem ersten Satz von Eingabewerten;
Bestimmen eines Zustands des Softwaresystems, in dem eine Verifizierung des Softwaresystems zu initiieren ist;
Bestimmen eines Satzes von Zuständen, die dem Softwaresystem während des ersten Satzes von Schritten zugeordnet sind, die durch das Softwaresystem durchgeführt werden;
Speichern von Werten von Zustandsvariablen, die jedem Zustand des Softwaresystems zugeordnet sind, in einer Verifizierungsdatenbank;
Bestimmen eines Zustands des Softwaresystems, in dem die Verifizierung des Softwaresystems zu initiieren ist, umfassend das sofortige Bestimmen eines gewünschten Zustands aus dem Satz von Zuständen, in dem das Softwaresystem in einem Betriebsmodus entsprechend dem gewünschten Zustand zu arbeiten beginnt;
Initialisieren des Softwaresystems in dem bestimmten Zustand unter Verwendung von Werten der Zustandsvariablen, die dem in der Verifizierungsdatenbank gespeicherten bestimmten Zustand zugeordnet sind;
Initialisieren des Verifizierens des initialisierten Softwaresystems in dem bestimmten Zustand;
Durchführen der Verifizierung des Softwaresystems für einen zweiten Satz von Schritten basierend auf einem zweiten Satz von Eingabewerten; und
Ausgeben der Ergebnisse der Verifizierung des Softwaresystems auf einer Anzeigeeinheit,
wobei das Durchführen der Verifizierung des Softwaresystems umfasst:
Parsen der dem Softwaresystem zugeordneten Aussagen der Programmiersprache;
Erzeugen eines Steuerflussgraphen basierend auf den geparsten Programmiersprachenanweisungen; und
Bestimmen, ob einer des zweiten Satzes von Eingabewerten zu einer Verletzung einer Vorgabe des Softwaresystems führt, wobei die maschinenlesbaren Anweisungen die Verarbeitungseinheit (102) veranlassen, Verfahrensschritte auszuführen, die umfassen:
Parsen der dem Softwaresystem zugeordneten Aussagen der Programmiersprache;
Erzeugen eines Steuerflussgraphen basierend auf den geparsten Programmiersprachenanweisungen; und
Bestimmen, ob einer der Eingabewerte aus dem zweiten Satz zu einer Verletzung einer Vorgabe des Softwaresystems führt.

10. Speichermedium nach Anspruch 9, wobei die maschinenlesbaren Anweisungen die Verarbeitungseinheit (102) veranlassen, einen Verfahrensschritt durchzuführen, der umfasst:
Erzeugen einer Mehrzahl von Testvektoren, die in der Lage sind, das Softwaresystem zu testen.

11. Speichermedium nach einem der Ansprüche 9 oder 11, wobei die Simulation des Softwaresystems unter Verwendung einer Closed-Loop-Simulationstechnik durchgeführt wird und wobei die Verifizierung des Softwaresystems unter Verwendung einer beschränkten Modell-Prüftechnik durchgeführt wird.

## Revendications

1. Appareil de traitement de données (100) pour vérifier un système logiciel comprenant des composants logiciels pour exécuter une ou plusieurs fonctions associées à un système matériel qui peut être exploité dans différents modes de fonctionnement, chaque mode comprenant une pluralité de variables d'état, l'appareil comprenant :
au moins une unité de traitement (102) ; et
au moins une unité de mémoire (104) couplée de manière communicative à l'unité de traitement (102), où l'unité de mémoire (104) comprend :
un module de simulation (116) configuré pour :
effectuer une simulation du système logiciel pour un premier ensemble d'étapes sur la base d'un premier ensemble de valeurs d'entrée ;
déterminer un ensemble d'états associés au système logiciel pendant le premier ensemble d'étapes exécutées par le système logiciel ;
stocker les valeurs des variables d'état associées à chaque état du système logiciel dans une base de données de vérification ;
et
un module de vérification (118) configuré pour :
déterminer un état du système logiciel dans lequel la vérification du système logiciel doit être initiée, la détermination de l'état du système logiciel dans lequel la vérification du système logiciel doit être initiée comprenant la détermination instantanée d'un état souhaité à partir de l'ensemble des états dans lesquels le système logiciel commence à fonctionner dans un mode de fonctionnement correspondant à l'état souhaité ;
initialiser le système logiciel dans l'état déterminé en utilisant les valeurs des variables d'état associées à l'état déterminé stockées dans la base de données de vérification ;
lancer la vérification du système logiciel initialisé dans l'état déterminé ;
effectuer la vérification du système logiciel pour un deuxième ensemble d'étapes sur la base d'un deuxième ensemble de valeurs d'entrée ; et
afficher les résultats de la vérification du système logiciel sur une unité d'affichage (110),
où le module de vérification (118) est en outre configuré pour :
analyser les énoncés du langage de programmation associés au système logiciel ;
générer un graphique de flux de contrôle basé sur les énoncés de langage de programmation analysés ; et
déterminer si l'une quelconque des valeurs d'entrée du deuxième ensemble de valeurs d'entrée entraîne la violation d'une spécification du système logiciel.

2. Appareil de traitement de données (100) selon la revendication 1, dans lequel le module de vérification (118) est configuré pour générer une pluralité de vecteurs de test pour tester le système logiciel.

3. Appareil de traitement de données (100) selon la revendication 1 ou la revendication 2, dans lequel le module de simulation (116) est configuré pour effectuer la simulation du système logiciel à l'aide d'une technique de simulation en boucle fermée.

4. Appareil de traitement de données (100) selon la revendication 1 ou la revendication 2, dans lequel le module de vérification (118) est configuré pour effectuer la vérification du système logiciel à l'aide d'une technique de vérification de modèle borné.

5. Procédé de vérification d'un système logiciel comprenant des composants logiciels pour exécuter une ou plusieurs fonctions associées à un système matériel qui peut être exploité dans différents modes de fonctionnement, chaque mode comprenant une pluralité de variables d'état, le procédé comprenant les étapes suivantes :
exécuter, par un appareil de traitement de données (100), la simulation d'un système logiciel pour un premier ensemble d'étapes sur la base d'un premier ensemble de valeurs d'entrée ;
déterminer, par l'appareil de traitement de données (100), un état du système logiciel dans lequel la vérification du système logiciel doit être lancée ;
déterminer, par l'appareil de traitement de données (100), un ensemble d'états associés au système logiciel pendant le premier ensemble d'étapes exécutées par le système logiciel ;
stocker, par l'appareil de traitement de données (100), les valeurs des variables d'état associées à chaque état du système logiciel dans une base de données de vérification ;
déterminer un état du système logiciel dans lequel la vérification du système logiciel doit être initiée, ce qui comprend la détermination instantanée d'un état souhaité à partir de l'ensemble d'états dans lesquels le système logiciel commence à fonctionner dans un mode de fonctionnement correspondant à l'état souhaité ; l'initialisation, par l'appareil de traitement de données (100), du système logiciel dans l'état déterminé en utilisant les valeurs des variables d'état associées à l'état déterminé stocké dans la base de données de vérification ;
lancer la vérification du système logiciel initialisé dans l'état déterminé ;
effectuer, par l'appareil de traitement de données (100), la vérification du système logiciel pour un deuxième ensemble d'étapes sur la base d'un deuxième ensemble de valeurs d'entrée, afficher, par l'appareil de traitement de données (100), les résultats de la vérification du système logiciel sur une unité d'affichage (110),
où la vérification du système logiciel comprend les étapes suivantes :
analyser les énoncés du langage de programmation associés au système logiciel ;
générer un diagramme de flux de contrôle basé sur les énoncés du langage de programmation analysés ; et
déterminer si l'une quelconque des valeurs d'entrée du deuxième ensemble de valeurs d'entrée entraîne la violation d'une spécification du système logiciel.

6. Procédé selon la revendication 5, comprenant en outre l'étape suivante :
générer, par l'appareil de traitement de données (100), une pluralité de vecteurs de test capables de tester le système logiciel.

7. Procédé selon la revendication 5 ou la revendication 6, dans lequel la simulation du système logiciel est réalisée en utilisant une technique de simulation en boucle fermée.

8. Procédé selon la revendication 5 ou la revendication 6, dans lequel la vérification du système logiciel est réalisée en utilisant une technique de vérification de modèle borné.

9. Support de stockage non transitoire lisible par ordinateur, sur lequel sont stockées des instructions lisibles par machine qui, lorsqu'elles sont exécutées par une unité de traitement (102) , amènent l'unité de traitement (102) à exécuter un procédé de vérification d'un système logiciel comprenant des composants logiciels destinés à exécuter une ou plusieurs fonctions associées à un système matériel qui peut être exploité dans différents modes de fonctionnement, chaque mode comprenant une pluralité de variables d'état, le procédé comprenant les étapes suivantes :
effectuer une simulation d'un système logiciel pour un premier ensemble d'étapes sur la base d'un premier ensemble de valeurs d'entrée ;
déterminer un état du système logiciel dans lequel la vérification du système logiciel doit être lancée ;
déterminer un ensemble d'états associés au système logiciel pendant le premier ensemble d'étapes exécutées par le système logiciel ;
stocker les valeurs des variables d'état associées à chaque état du système logiciel dans une base de données de vérification ;
déterminer un état du système logiciel dans lequel la vérification du système logiciel doit être lancée, ce qui comprend la détermination instantanée d'un état souhaité à partir de l'ensemble des états dans lesquels le système logiciel commence à fonctionner dans un mode de fonctionnement correspondant à l'état souhaité ;
initialiser le système logiciel dans l'état déterminé en utilisant les valeurs des variables d'état associées à l'état déterminé stockées dans la base de données de vérification ;
lancer la vérification du système logiciel initialisé dans l'état déterminé ;
effectuer la vérification du système logiciel pour un deuxième ensemble d'étapes sur la base d'un deuxième ensemble de valeurs d'entrée ; et
afficher les résultats de la vérification du système logiciel sur une unité d'affichage,
où la vérification du système logiciel comprend les étapes suivantes :
analyser les énoncés du langage de programmation associés au système logiciel ;
générer un diagramme de flux de contrôle basé sur les énoncés du langage de programmation analysés ; et
déterminer si l'une quelconque des valeurs d'entrée du deuxième ensemble de valeurs d'entrée entraîne la violation d'une spécification du système logiciel, où les instructions lisibles par machine amènent l'unité de traitement (102) à exécuter des étapes du procédé comprenant les suivantes :
analyser les énoncés du langage de programmation associés au système logiciel ;
générer un diagramme de flux de contrôle basé sur les énoncés du langage de programmation analysés ; et
déterminer si l'une quelconque des valeurs d'entrée du deuxième ensemble de valeurs d'entrée entraîne la violation d'une spécification du système logiciel.

10. Support de stockage selon la revendication 9, dans lequel les instructions lisibles par machine amènent l'unité de traitement (102) à exécuter une étape du procédé comprenant :
la génération d'une pluralité de vecteurs de test capables de tester le système logiciel.

11. Support de stockage selon l'une quelconque des revendications 9 ou 11, où la simulation du système logiciel est réalisée en utilisant une technique de simulation en boucle fermée, et où la vérification du système logiciel est réalisée en utilisant une technique de vérification de modèle borné.
